(19) Europäisches Patentamt
European Patent Office
Office européen des brevets

(11) EP 4 431 888 A1

(12) EUROPEAN PATENT APPLICATION
published in accordance with Art. 153(4) EPC

(43) Date of publication:
18.09.2024 Bulletin 2024/38

(51) International Patent Classification (IPC):
G01J 9/02 (2006.01)     G03H 1/08 (2006.01)
G01B 11/24 (2006.01)    G01N 21/45 (2006.01)

(21) Application number: 21963334.4

(22) Date of filing: 08.11.2021

(52) Cooperative Patent Classification (CPC):
G01B 11/24; G01J 9/02; G01N 21/45; G03H 1/04;
G03H 1/08

(86) International application number:
PCT/JP2021/040987

(87) International publication number:
WO 2023/079741 (11.05.2023 Gazette 2023/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Otsuka Electronics Co., Ltd.
Hirakata-shi, Osaka 573-1132 (JP)

(72) Inventor: SHIMODA, Kensaku
Hirakata-shi, Osaka 573-1132 (JP)

(74) Representative: Hoffmann Eitle
Patent- und Rechtsanwälte PartmbB
Arabellastraße 30
81925 München (DE)

(54) OPTICAL MEASURING METHOD, AND OPTICAL MEASURING SYSTEM

(57) An optical measurement method includes: preparing an optical system for recording a hologram caused by modulating, with a reference beam, an object beam obtained by illumination of a sample with illumination light, the reference beam being coherent to the illumination light; arranging a calibration unit on an optical path of the illumination light in a state where there is no sample, the calibration unit including an optical system that produces a known optical wave distribution; recording a first hologram caused while the calibration unit is producing an optical wave distribution; and calculating information about an optical wave distribution of the reference beam based on information indicating a position where the calibration unit is arranged, the known optical wave distribution, and the first hologram.

FIG.6

```
         CALIBRATION PROCESSING

                    │
                    ▼                    ┌─ S200
   PREPARE OPTICAL SYSTEM SHOWN IN FIG. 2
   AND ARRANGE CALIBRATION UNIT
                    │
                    ▼                    ┌─ S202
   ACCURATELY SET OFFSET COORDINATE
   (x_p0, y_p0, z_p0) OF CALIBRATION UNIT
                    │
                    ▼                    ┌─ S204
   GENERATE COHERENT LIGHT FROM LIGHT
   SOURCE AND RECORD CALIBRATION HOLOGRAM
   I_P0R USING IMAGE SENSOR
                    │
                    ▼                    ┌─ S206
   CALCULATE OPTICAL WAVE DISTRIBUTION P_0
   USING KNOWN OPTICAL WAVE DISTRIBUTION P
   AND OFFSET COORDINATE (x_p0, y_p0, z_p0)
                    │
                    ▼                    ┌─ S208
   CALCULATE COMPLEX CONJUGATE R* OF
   OPTICAL WAVE DISTRIBUTION OF REFERENCE
   BEAM R USING OPTICAL WAVE DISTRIBUTION P_0
   AND RECORDED CALIBRATION HOLOGRAM I_P0R
                    │
                    ▼                    ┌─ S210
   OUTPUT CALIBRATION INFORMATION INCLUDING
   COMPLEX CONJUGATE R* OF OPTICAL WAVE
   DISTRIBUTION OF REFERENCE BEAM R
                    │
                    ▼
                  END
```

**Description**

TECHNICAL FIELD

The present invention relates to an optical measurement method and an optical measurement system that make use of digital holography.

BACKGROUND ART

Digital holography has been proposed and put into practical use as a method of more accurate measurement of a geometry of a sample. Digital holography is a technique for measuring a geometry or the like of a sample by obtaining a shape of a wave front of an object beam by observing interference fringes produced as a result of superimposition on a reference beam, of the object beam produced as a result of irradiation of the sample with light. Typically, the following prior art exists.

US Patent No. 6411406 (PTL 1) discloses a method of reconstructing a holographic image, and the like.

International Publication No. 2013/047709 (PTL 2) discloses a practical digital holography method having both a reflection mode and a transmission mode.

International Publication No. 2011/089820 (PTL 3) discloses a generation method for a complex amplitude in-line hologram, and the like.

International Publication No. 2012/005315 (PTL 4) discloses a method for generating a hologram for high-resolution image reconstruction, and the like, for reconstructing a high-resolution image from a complex amplitude in-line hologram of a microscopic subject obtained using in-line spherical wave light.

International Publication No. 2020/045584 (PTL 5) discloses a holographic imaging device and the like having the improved performance by considering the influence of an index of refraction of a cube-type beam combiner that forms an optical system. More specifically, International Publication No. 2020/045584 discloses a method of generating an in-line reference beam hologram indicating an optical wave on a hologram plane, by performing, on a spherical wave emitted from a light condensation point of an in-line spherical wave reference beam, light wave propagation calculation including propagation calculation inside the beam combiner in consideration of the index of refraction of the beam combiner.

CITATION LIST

PATENT LITERATURE

PTL 1: US Patent No. 6411406
PTL 2: International Publication No. 2013/047709
PTL 3: International Publication No. 2011/089820
PTL 4: International Publication No. 2012/005315
PTL 5: International Publication No. 2020/045584

SUMMARY OF INVENTION

TECHNICAL PROBLEM

The method disclosed in US Patent No. 6411406 (PTL 1) has such a problem that an accurate object beam is not obtained due to superimposition of a conjugate image.

The method disclosed in International Publication No. 2013/047709 (PTL 2) has such a problem that because of the configuration using an imaging optical system, an aberration occurs in the imaging optical system and a three-dimensional distribution cannot be accurately recorded.

International Publication No. 2011/089820 (PTL 3) has such a problem that since determination of a reference beam is not perfect, distortion may occur in recorded object beam data.

International Publication No. 2012/005315 (PTL 4) and International Publication No. 2020/045584 (PTL 5) have such a problem that accurate adjustment of the in-line spherical wave light to an in-line axis is necessary and time and efforts are required for adjustment.

The present invention provides a technique capable of reducing time and efforts required for adjustment and measuring a sample with a higher degree of accuracy.

SOLUTION TO PROBLEM

An optical measurement method according to an aspect of the present invention includes: preparing an optical system for recording a hologram caused by modulating, with a reference beam, an object beam obtained by illumination of a sample with illumination light, the reference beam being coherent to the illumination light; arranging a calibration unit on an optical path of the illumination light in a state where there is no sample, the calibration unit including an optical system that produces a known optical wave distribution; recording a first hologram caused while the calibration unit is producing an optical wave distribution; and calculating information about an optical wave distribution of the reference beam based on information indicating a position where the calibration unit is arranged, the known optical wave distribution, and the first hologram.

The calibration unit may be configured to spatially move the produced optical wave distribution. The optical measurement method may further include: moving the produced optical wave distribution to a plurality of positions different from a position where the first hologram is recorded, and recording a plurality of second holograms caused at the plurality of positions, respectively; calculating a wave front aberration based on a spectrum calculated from the known optical wave distribution and a spectrum calculated from optical wave distributions corresponding to the plurality of second holograms; and adjusting the information indicating the position where the calibration unit is arranged, to minimize the wave front aberration.

The optical measurement method may further include: applying spatial frequency filtering to each of the plurality of second holograms, and calculating a plurality of object beam holograms corresponding to the plurality of second holograms, respectively, based on a filtering result and the information about the optical wave distribution of the reference beam; and correcting each of the plurality of object beam holograms based on the known optical wave distribution, thereby calculating a plurality of optical wave distributions corresponding to the plurality of second holograms, respectively.

The calculating a wave front aberration may include: calculating a phase difference distribution spectrum, the phase difference distribution spectrum being a phase difference distribution of the spectrum calculated from the known optical wave distribution and the spectrum calculated from the optical wave distributions corresponding to the second holograms; and calculating, as an error, a root mean square with respect to an average value of the phase difference distribution spectrum as a whole.

The optical measurement method may further include: recording a third hologram caused by modulating, with the reference beam, the object beam obtained by illumination of the sample with the illumination light; and applying spatial frequency filtering to the third hologram, and calculating an object beam hologram based on a filtering result and the information about the optical wave distribution of the reference beam.

The information about the optical wave distribution of the reference beam may include a complex conjugate of the optical wave distribution of the reference beam.

An optical measurement method according to another aspect of the present invention includes: preparing an optical system for recording a hologram caused by modulating, with a reference beam, an object beam obtained by illumination of a sample with illumination light, the reference beam being coherent to the illumination light; obtaining information about an optical wave distribution of the reference beam in the optical system; recording the hologram caused by modulating, with the reference beam, the object beam obtained by illumination of the sample with the illumination light, the reference beam being coherent to the illumination light; and applying spatial frequency filtering to the hologram, and calculating an object beam hologram based on a filtering result and the information about the optical wave distribution of the reference beam.

The information about the optical wave distribution of the reference beam may be preliminarily calculated based on a hologram recorded when a calibration unit including an optical system that produces a known optical wave distribution is arranged on an optical path of the illumination light in a state where there is no sample, information indicating a position where the calibration unit is arranged, and the known optical wave distribution.

An optical measurement system according to still another aspect of the present invention includes: a light source that generates coherent light; a beam splitter that produces illumination light and a reference beam from the coherent light generated by the light source; an optical system for recording, using an image sensor, a hologram caused by modulating, with the reference beam, an object beam obtained by illumination of a sample with the illumination light, the reference beam being coherent to the illumination light; and a processing apparatus including a storage that stores information about an optical wave distribution of the reference beam in the optical system. The processing apparatus applies spatial frequency filtering to the hologram recorded using the image sensor, and calculates an object beam hologram based on a filtering result and the information about the optical wave distribution of the reference beam.

The information about the optical wave distribution of the reference beam may be preliminarily calculated based on a hologram recorded when a calibration unit including an optical system that produces a known optical wave distribution is arranged on an optical path of the illumination light in a state where there is no sample, information indicating a position where the calibration unit is arranged, and the known optical wave distribution.

ADVANTAGEOUS EFFECTS OF INVENTION

According to an embodiment of the present invention, it is possible to reduce time and efforts required for adjustment and measure a sample with a higher degree of accuracy.

BRIEF DESCRIPTION OF DRAWINGS

Fig. 1 is a schematic diagram showing an exemplary configuration (for measurement processing) of an optical measurement system according to the present embodiment.
Fig. 2 is a schematic diagram showing an exemplary configuration (calibration processing) of the optical measurement system according to the present embodiment.
Fig. 3 is a schematic diagram showing an exemplary configuration of a profile generator of the optical measurement system according to the present embodiment.
Fig. 4 is a schematic diagram showing an exemplary hardware configuration of a processing apparatus included in the optical measurement system according to the present embodiment.
Fig. 5 is a flowchart showing a process procedure of the measurement processing performed in the optical measurement system according to the present embodiment.
Fig. 6 is a flowchart showing a process procedure of the calibration processing performed in the optical measurement system according to the present embodiment.
Fig. 7 is a flowchart showing another process procedure of the calibration processing performed in the optical measurement system according to the present embodiment.
Fig. 8 is a diagram showing measurement examples in an initial stage of the calibration processing in the optical measurement system according to the present embodiment.
Fig. 9 is a diagram showing measurement examples after the calibration processing in the optical measurement system according to the present embodiment.
Fig. 10 is a diagram showing measurement examples of a sample by the optical measurement system according to the present embodiment.
Fig. 11 is a schematic diagram showing an exemplary configuration of an optical measurement system according to a first modification of the present embodiment.
Fig. 12 is a schematic diagram showing an exemplary configuration of an optical measurement system according to a second modification of the present embodiment.
Fig. 13 is a schematic diagram showing an exemplary configuration of an optical measurement system according to a third modification of the present embodiment.
Fig. 14 is a schematic diagram showing an exemplary configuration of an optical measurement system according to a fourth modification of the present embodiment.

DESCRIPTION OF EMBODIMENTS

An embodiment of the present invention will be described in detail with reference to the drawings. The same or corresponding elements in the drawings have the same reference characters allotted and description thereof will not be repeated.

<A. Exemplary Configuration of Optical Measurement System>

An optical measurement system according to the present embodiment makes use of digital holography where diverging light such as a point light source is used as a reference beam. A configuration of lensless digital holography where there is no lens between a sample and an image sensor is adopted in the optical measurement system according to the present embodiment.

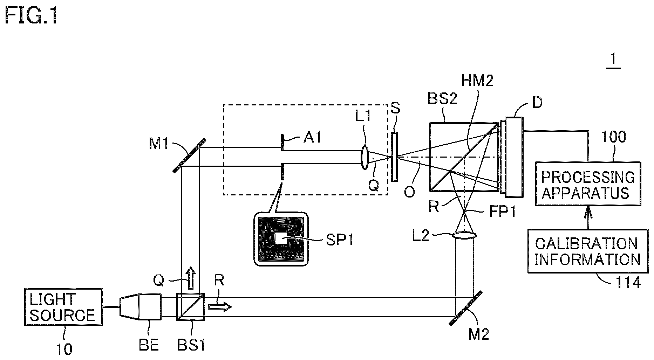

Fig. 1 is a schematic diagram showing an exemplary configuration (for measurement processing) of an optical measurement system 1 according to the present embodiment. An optical wave distribution indicating a shape of a sample is recorded using the exemplary configuration shown in Fig. 1. More specifically, the optical system shown in Fig. 1 corresponds to an optical system for recording a hologram $I_{OR}$ caused by modulating, with an off-axis-arranged reference beam R, an object beam O obtained by illumination of a sample S with illumination light Q.

Referring to Fig. 1, optical measurement system 1 includes a light source 10, a beam expander BE, beam splitters BS1 and BS2, mirrors M1 and M2, a field-of-view mask A1, condensing lenses L1 and L2, and an image sensor D.

Light source 10 is implemented by laser or the like, and generates coherent light.

Beam expander BE expands a cross-sectional diameter of light from light source 10 to a predetermined size.

Beam splitter BS1 divides light expanded by beam expander BE into two light beams. One light beam divided by beam splitter BS1 (light beam on the reflection side of beam splitter BS1) corresponds to illumination light Q and the other light beam (light beam on the transmission side of beam splitter BS1) corresponds to off-axis-arranged reference beam R. Therefore, illumination light Q and reference beam R are coherent to each other. In this way, beam splitter BS1 produces illumination light Q and reference beam R from the coherent light generated by light source 10.

Illumination light Q is reflected by mirror M1 and changed in propagation direction, and then, passes through field-of-view mask A1.

Field-of-view mask A1 restricts a range of illumination of sample S with illumination light Q to be kept within a predetermined range. Such a field-of-view mask A1 that an opening SP1 corresponding to a predetermined range is formed in a light shielding member may be employed as an exemplary restriction mechanism. Illumination light Q passes through an area corresponding to opening SP1.

An image of opening SP1 of field-of-view mask A1 passes through condensing lens L1 and is focused on sample S. In other words, of light with which field-of-view mask A1 is illuminated, only light in a portion corresponding to opening SP1 passes through field-of-view mask A1. The range of illumination of sample S with illumination light Q that passes through field-of-view mask A1 can thus be restricted.

The range of illumination of sample S is determined such that superimposition of a component containing information about object beam O on a light intensity component and a conjugate optical component in a Fourier space (spatial frequency domain) can be avoided. By such restriction of the illumination range with illumination light Q, noise due to superimposition between components can be suppressed and measurement with a higher degree of accuracy can be realized. Field-of-view mask A1 may be omitted.

Illumination light Q passes through sample S and object beam O is thus produced. Object beam O passes through a half mirror HM2 of beam splitter BS2 and enters image sensor D.

On the other hand, reference beam R is reflected by mirror M2 and changed in propagation direction, and then, is condensed by condensing lens L2. A light condensation point FP1 by condensing lens L2 corresponds to the position of the point light source. In other words, off-axis-arranged reference beam R can be regarded as a light beam emitted from the point light source. Reference beam R is finally reflected by half mirror HM2 and enters image sensor D.

In this way, in half mirror HM2, object beam O obtained by illumination of sample S with illumination light Q is modulated with off-axis-arranged reference beam R. Hologram $I_{OR}$ caused by modulation is recorded using image sensor D.

A processing apparatus 100 calculates information necessary for reconstruction of an image of sample S, using hologram $I_{OR}$ recorded using image sensor D and calibration information 114 including a complex conjugate R* of an optical wave distribution of reference beam R obtained by calibration.

Although Fig. 1 shows the exemplary configuration in which cube-type beam splitter BS2 is adopted, an index of refraction of beam splitter BS2 may be made relatively higher, or the shape of the cube may be deformed into another arbitrary shape, in order to increase a numerical aperture or to ensure the working distance.

The beam splitter for recording hologram $I_{OR}$ may have any shape, as long as a boundary surface, which is a surface where different media are in contact with each other, is regarded as a plane. For example, a plate-shaped beam splitter, not the cube-type beam splitter, may be adopted.

In addition, beam splitter BS2 may be inclined with respect to an optical wave front of the object beam. By such inclination, stray light can be suppressed. In addition, although Fig. 1 shows the exemplary configuration in which sample S and image sensor D are arranged to face each other with beam splitter BS2 interposed therebetween, an exemplary configuration in which condensing lens L2 and image sensor D are arranged to face each other with beam splitter BS2 interposed therebetween may be adopted.

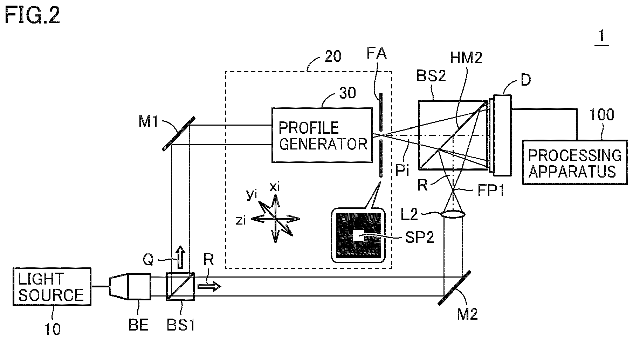

Fig. 2 is a schematic diagram showing an exemplary configuration (calibration processing) of optical measurement system 1 according to the present embodiment. Optical measurement system 1 shown in Fig. 2 is different from the configuration shown in Fig. 1 in that a calibration unit 20 is arranged instead of sample S, field-of-view mask A1 and condensing lens L1. The configuration related to reference beam R (mirror M2 and condensing lens L2) is maintained to be the same as the configuration in Fig. 1.

A calibration hologram $I_{PiR}$ is recorded using the exemplary configuration shown in Fig. 2. Calibration hologram $I_{PiR}$ is a collection of holograms caused as a result of translation of a known optical wave distribution P(x, y, z) to a plurality of positions and modulation with off-axis-arranged reference beam R.

In the present specification, "known optical wave distribution" refers to an optical wave distribution that can be specified with the accuracy required for the requested measurement performance. Therefore, the optical wave distribution of the light used to produce calibration hologram $I_{PiR}$ may only be approximately expressible with the required accuracy and does not need to be completely describable without any error. The optical wave distribution itself is assumed not to change with translation.

Recording calibration hologram $I_{PiR}$ eliminates the need for accurately adjusting an in-line spherical wave light to an in-line axis, unlike the configurations disclosed in PTLs 4 and 5 above. Image reconstruction processing using calibration hologram I$_{PiR}$ will be described below.

Calibration unit 20 includes a profile generator 30 and a field-of-view restriction mask FA.

Profile generator 30 is an optical system that produces the known optical wave distribution. In this way, calibration unit 20 including the optical system (profile generator 30) that produces the known optical wave distribution is arranged on an optical path of illumination light Q in a state where there is no sample S.

Profile generator 30 may be configured to be capable of spatially moving the produced optical wave distribution. More specifically, profile generator 30 may have the function of being capable of translating (shifting) the optical wave distribution in each of the x-axis direction, the y-axis direction and the z-axis direction. Illumination light Q divided by beam splitter BS1 is reflected by mirror M1 and changed in propagation direction, and then, enters profile generator 30, thereby producing spatially movable known optical wave distribution P.

Field-of-view restriction mask FA has an opening SP2 corresponding to a range of a field of view that can be recorded using image sensor D. The position of field-of-view restriction mask FA is fixed. Although optical wave distribution P produced by profile generator 30 can translate in each of the x-axis direction, the y-axis direction and the z-axis direction, opening SP2 of field-of-view restriction mask FA is designed so as not to block optical wave distribution P produced by profile generator 30. In other words, optical wave distribution P translates within a range where optical wave distribution P can pass through opening SP2 of field-of-view restriction mask FA. Field-of-view restriction mask FA may be omitted.

<B. Exemplary Configuration of Profile Generator 30>

An exemplary configuration of profile generator 30 of calibration unit 20 will now be described. As described above, any optical system may be adopted as profile generator 30, as long as the optical system can produce the known optical wave distribution. Several typical exemplary configurations of profile generator 30 will be described.

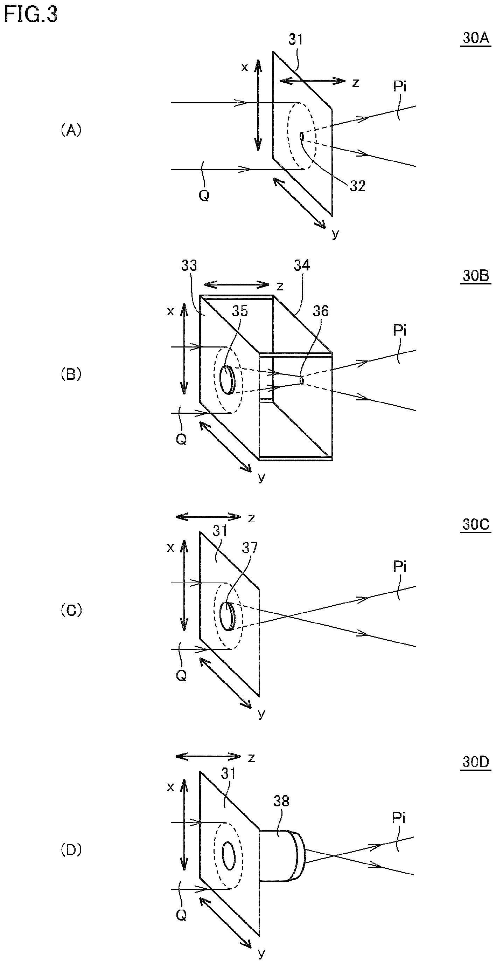

Fig. 3 is a schematic diagram showing an exemplary configuration of profile generator 30 of optical measurement system 1 according to the present embodiment. Each of the optical systems shown in Figs. 3(A) to 3(D) produces known optical wave distribution P at the time of incidence of illumination light Q, which is a plane wave.

A profile generator 30A shown in Fig. 3(A) is an optical system using a pinhole, and includes a light shielding plate 31 that can translate in each of the three axial directions. A pinhole 32 is provided within a range of illumination with illumination light Q in light shielding plate 31. A beam diameter of illumination light Q is set to the size that allows sufficient illumination of the range including pinhole 32.

A profile generator 30B shown in Fig. 3(B) is an optical system using a pinhole and a condensing lens, and includes a light shielding plate 33 and a light shielding plate 34 that can translate in each of the three axial directions. Light shielding plate 33 and light shielding plate 34 are coupled to each other and translate integrally. A condensing lens 35 is provided within a range of illumination with illumination light Q in light shielding plate 33, and a pinhole 36 is provided within a range of illumination with illumination light Q that has passed through light shielding plate 34. A beam diameter of illumination light Q is set to the size that allows a sufficient amount of light to pass through condensing lens 35 and pinhole 36.

A profile generator 30C shown in Fig. 3(C) is an optical system using no pinhole and using a condensing lens having a known aberration. Profile generator 30C includes light shielding plate 31 that can translate in each of the three axial directions. A condensing lens 37 is provided within a range of illumination with illumination light Q in light shielding plate 31. A beam diameter of illumination light Q is set to the size that allows sufficient illumination of the range including condensing lens 37.

A profile generator 30D shown in Fig. 3(D) is an optical system using no pinhole and using an objective lens having a known aberration. Profile generator 30D includes light shielding plate 31 that can translate in each of the three axial directions. An objective lens 38 is provided within a range of illumination with illumination light Q in light shielding plate 31. A beam diameter of illumination light Q is set to the size that allows sufficient illumination of the range including objective lens 38.

Profile generator 30 is not limited to the exemplary configurations shown in Figs. 3(A) to 3(D), and an arbitrary optical system that can produce the known optical wave distribution can be adopted.

<C. Measurement Processing>

Processing for measuring sample S by optical measurement system 1 will now be described. In the description below, a light receiving surface of image sensor D is defined as a "recording surface" and an intersection between the recording surface and a central optical axis of beam splitter BS2 is defined as the "origin". A direction of the optical axis is defined as a z axis and two axes orthogonal to the z axis are defined as an x axis and a y axis, respectively. In other words, the optical axis is perpendicular to the recording surface of image sensor D and the x axis and the y axis are in parallel to the recording surface of image sensor D.

In addition, a surface of interest that is distant from the recording surface by a predetermined distance is referred to as a "sample surface".

In the optical system shown in Fig. 1, optical wave distributions of object beam O and reference beam R recorded using image sensor D can be expressed in general expressions such as expressions (1) and (2) below.

$$O(x,y) = O_0(x,y)\exp[i(\varphi_O(x,y) - \omega t)] \qquad \cdots (1)$$

$$R(x,y) = R_0(x,y)\exp[i(\varphi_R(x,y) - \omega t)] \qquad \cdots (2)$$

Object beam O and off-axis-arranged reference beam R are beams having angle frequencies $\omega$ and being coherent to each other. For convenience in description, the coordinate (x, y) may be omitted as appropriate in the following expressions.

Hologram $I_{OR}$ recorded using image sensor D in one scan is calculated as in an expression (3) below, as light intensity of synthesized light of light expressed in the expression (1) and light expressed in the expression (2).

$$I_{OR}(x,y) = |O + R|^2 = O_0^2 + R_0^2 + O_0 R_0 \exp[i(\varphi_O - \varphi_R)] + O_0 R_0 \exp[-i(\varphi_O - \varphi_R)] \qquad \cdots (3)$$

Spatial frequency filtering is applied to the expression (3), and a complex amplitude hologram $J_{OR}$ is thus calculated as in an expression (4) below.

$$J_{OR}(x,y) = O_0 R_0 \exp[i(\varphi_O - \varphi_R)] \qquad \cdots (4)$$

Complex amplitude hologram $J_{OR}$ is divided by complex conjugate R* (= $R_0\exp(-i\varphi_R)$) of the optical wave distribution of reference beam R obtained by the calibration processing, and an object beam hologram U is thus calculated as in an expression (5) below.

$$U(x,y) = \frac{J_{OR}}{R^*} = \frac{O_0 R_0 \exp[i(\varphi_O - \varphi_R)]}{R_0 \exp(-i\varphi_R)} = O_0 \exp(i\varphi_O) \qquad \cdots (5)$$

Object beam hologram U shown in the expression (5) corresponds to the optical wave distribution of object beam O on the recording surface of image sensor D from which a time term ($-\omega t$) is removed. Therefore, by using diffraction calculation that does not use approximation such as plane wave expansion, aberration-free accurate image reconstruction can be achieved.

When object beam hologram U includes a frequency component that does not satisfy a sampling theorem, the number of sampling (the number of pixels) of complex amplitude hologram $J_{OR}$ may be increased by interpolation processing before division by complex conjugate R* of the optical wave distribution of reference beam R. Complex amplitude hologram $J_{OR}$ hologram may be decreased by increasing the number of sampling and then dividing the increased complex amplitude hologram $J_{OR}$ into lattices and superimposing the divided lattices. The size of each lattice is preferably made larger than the size of the image reconstructed from the hologram. By performing such increase of the number of sampling and superimposition, an increase in amount of computation can be suppressed.

Alternatively, by using the nature of Fourier transform, processing corresponding to the increase of the number of sampling points and the superimposition may be implemented on a Fourier spectrum.

A complex amplitude distribution obtained by the increase of the number of sampling and the superimposition is defined as a reconstruction object beam hologram $U_\Sigma$. When the increase of the number of sampling and the superimposition are unnecessary, object beam hologram U is adopted as it is as reconstruction object beam hologram $U_\Sigma$.

Reconstruction object beam hologram $U_\Sigma$ is a hologram having information that allows reconstruction of a state of the sample surface.

Diffraction calculation in a medium and reconstruction of an image on an inclined surface will now be described.

By performing diffraction calculation by plane wave expansion on reconstruction object beam hologram $U_\Sigma$, an optical wave distribution at any sample surface can be reconstructed. An optical wave distribution resulting from propagation over a distance d of reconstruction object beam hologram $U_\Sigma$ (at a sample surface distant from the recording surface by distance d) by plane wave expansion is denoted as a complex amplitude distribution $U_d$.

Complex amplitude distribution $U_d$ can be generalized as in an expression (6) below, where d represents a distance from the recording surface of image sensor D to a position at which reconstruction is performed, within which M media (m = 1, 2, ..., M) are included, $d_m$ represents a distance of each medium, and $n_m$ represents an index of refraction of each medium. $k_{zm}$ in the expression is calculated in accordance with an expression (7).

$$U_d(x,y) = F^{-1}\left[ F[U_\Sigma(x,y)] \prod_{m=1}^{M} T_{m,m+1} \exp(ik_{zm}d_m) \right] \quad \cdots(6)$$

$$k_{zm} = \sqrt{\left(\frac{2\pi n_m}{\lambda}\right)^2 - k_x^2 - k_y^2} \quad \cdots(7)$$

When there are a plurality of media, a boundary surface between the media is assumed as being in parallel to the recording surface. A transmission coefficient at the time of incidence from a medium m into a medium m+1 is expressed as $T_{m,\ m+1}(k_x,\ k_y)$. $T_{M,\ M+1}(k_x,\ k_y)$ is regarded as being always 1.

For example, in the case of propagation only through air by distance d, a condition of M = 1, di = d, and $n_m$ = 1 is set.

When the transmission coefficient at the time of incidence from medium m into medium m+1 can be regarded as being even without depending on wave numbers $k_x$ and $k_y$, calculation may be simplified with $T_{m,\ m+1}$ being defined as $T_{m,\ m+1} \equiv 1$.

Furthermore, when the boundary surface between the media does not match an optical wave front, a coordinate system is transformed with rotation such that the optical wave front matches the boundary surface. In this case, the boundary surface between the media does not need to be in parallel to the recording surface. The operation of transformation with rotation can be performed on a spatial frequency spectrum. By Fourier transform of an optical wave front in a medium having an index of refraction of n in accordance with expressions (8) and (9) below, a spatial frequency vector v = (u, v, w) in a coordinate (u, v) of a spatial frequency spectrum is calculated.

$$v = \begin{bmatrix} u \\ v \\ w \end{bmatrix} \quad \cdots(8)$$

$$w = \sqrt{\left(\frac{n}{\lambda}\right)^2 - u^2 - v^2} \quad \cdots(9)$$

By transformation with rotation of spatial frequency vector v in accordance with an expression (10) below, using a matrix A that defines transformation with rotation into a new coordinate system, a new spatial frequency vector (u', v', w') is calculated.

$$\begin{bmatrix} u' \\ v' \\ w' \end{bmatrix} = A \begin{bmatrix} u \\ v \\ w \end{bmatrix} \quad \cdots(10)$$

The coordinate u' and the coordinate v' of the calculated spatial frequency vector correspond to the coordinates of the spatial frequency spectrum after transformation with rotation. By performing the above-described operation of transformation with rotation on all data about wave fronts before the boundary surface, spatial frequency spectrums of wave fronts after the boundary surface can be calculated.

Furthermore, reconstruction of an image on an inclined surface can also be used. By inverse Fourier transform of the spatial frequency spectrum of the wave front after transformation with rotation, an optical wave distribution on the surface after transformation with rotation can be calculated.

The optical wave distribution obtained as a result of diffraction calculation is complex amplitude distribution $U_d$ of the object beam. Therefore, complex amplitude distribution $U_d$ can be visualized by arbitrary computing processing. For example, an image corresponding to a bright field of an optical microscope is obtained by extracting an amplitude component from complex amplitude distribution $U_d$ and forming an image of the extracted amplitude component.

<D. Calibration Processing>

The calibration processing using the exemplary configuration shown in Fig. 2 will now be described. In the calibration processing, information about the optical wave distribution of reference beam R is determined. The information about the optical wave distribution of reference beam R includes complex conjugate R* of the optical wave distribution of reference beam R.

In the exemplary configuration shown in Fig. 2, known optical wave distribution P produced by calibration unit 20 is translated to an arbitrary offset coordinate $(x_{pi}, y_{pi}, z_{pi})$ (i = 0 to N-1), thereby producing an optical wave distribution $P_i$ (i = 0 to N-1). For example, as shown in Figs. 3(A) to 3(D), profile generator 30 is arbitrarily moved in one or more directions of the x-axis direction, the y-axis direction and the z-axis direction (i.e., the optical unit that produces optical wave distribution P is arranged at an arbitrary offset coordinate), and thereby, optical wave distribution $P_i$ can be produced.

Optical wave distribution $P_i$ is produced by translating known optical wave distribution P along the axial directions. Therefore, optical wave distribution $P_i$ on the recording surface (z = 0) of image sensor D can be expressed as in an expression (11) below, using (known) optical wave distribution P on the recording surface (z = 0) of image sensor D and the offset coordinate $(x_{pi}, y_{pi}, z_{pi})$.

$$P_i(x, y) = P\big(x - x_{pi}, y - y_{pi}, z - z_{pi}\big)\big|_{z=0} \qquad \cdots (11)$$

Calibration hologram $I_{PiR}$ recorded using image sensor D can be expressed as in an expression (12) below. By filtering the third term of the expression (12), a complex amplitude hologram $J_{PiR}$ is calculated as in an expression (13) below.

$$I_{PiR}(x, y) = |P_i + R|^2 = |P_i|^2 + |R|^2 + P_i R^* + P_i^* R \qquad \cdots (12)$$

$$J_{PiR}(x, y) = P_i R^* \qquad \cdots (13)$$

When the offset coordinate $(x_{pi}, y_{pi}, z_{pi})$ is known, complex conjugate R* (= $R_0 \exp(-i\phi_R)$) of the optical wave distribution of reference beam R is calculated as in an expression (14) below.

$$R^* = \frac{J_{PiR}}{P_0} \qquad \cdots (14)$$

In this case, complex conjugate R* of the optical wave distribution of reference beam R can be calculated from an optical wave distribution $P_0$ corresponding to one offset coordinate $(x_{p0}, y_{p0}, z_{p0})$. Profile generator 30 does not need to have the function of translating known optical wave distribution P to a plurality of positions.

In contrast, when the offset coordinate is unknown, or when the offset coordinate having the required accuracy is not obtained, complex conjugate R* of the optical wave distribution of reference beam R is determined using parameter fitting described below.

More specifically, an appropriate initial value is set as the offset coordinate $(x_{p0}, y_{p0}, z_{p0})$ corresponding to optical wave distribution $P_0$ when a number i = 0. The set initial value is determined in consideration of the optical positional relationship of calibration unit 20. An object beam hologram $U_i$ for an arbitrary number i can be expressed as in an expression (15) below, using complex conjugate R* of the optical wave distribution of reference beam R shown in the expression (14).

$$U_i(x, y) = \frac{J_{PiR}}{R^*} = \frac{J_{PiR}}{J_{P0R}} P_0 \qquad \cdots (15)$$

At this time, a relationship shown in an expression (16) below must be satisfied for all numbers i (i = 0 to N-1).

$$\frac{J_{PiR}}{J_{P0R}} P_0 = P_i \qquad \cdots(16)$$

When the number i = 0, it is clear that the relationship shown in the expression (16) is satisfied. When the number i ≠ 0, the expression (16) can be transformed into an expression (17) if complex conjugate R* of the optical wave distribution of reference beam R shown in the expression (14) is correctly calculated, and thus, the relationship shown in the expression (16) is satisfied.

$$\frac{J_{PiR}}{J_{P0R}} P_0 = \frac{P_i R^*}{P_0 R^*} = P_i \qquad \cdots(17)$$

In other words, the case in which the relationship shown in the expression (16) is not satisfied for all numbers i (i = 0 to N-1) means that complex conjugate R* of the optical wave distribution of reference beam R is not correctly calculated. A reason why complex conjugate R* of the optical wave distribution of reference beam R is not correctly calculated is that the offset coordinate $(x_{p0}, y_{p0}, z_{p0})$ is not correct. Therefore, adjustment of the offset coordinate $(x_{p0}, y_{p0}, z_{p0})$ to a correct value is necessary.

It is preferable to correct the optical wave distribution calculated from calibration hologram $I_{PiR}$, prior to adjustment of the offset coordinate $(x_{p0}, y_{p0}, z_{p0})$.

More specifically, optical wave distribution $P_i$ is corrected such that an optical wave distribution of an image reconstructed from object beam hologram $U_i$ matches known optical wave distribution P on the recording surface for each of the numbers i = 1 to N-1. The corrected optical wave distribution is referred to as a corrected optical wave distribution $P_i'$.

Based on the expression (11) and the expressions (15) to (17), a relationship shown in an expression (18) below is satisfied. It is assumed that complex conjugate R* of the optical wave distribution of reference beam R is not correctly calculated. In this state, object beam hologram $U_i$ is corrected in each of the x-axis direction, the y-axis direction and the z-axis direction so as to match known optical wave distribution P, thereby determining corrected optical wave distribution Pi', as shown in an expression (19) below.

$$P_i(x, y) = \frac{J_{PiR}}{R^*} = U_i(x, y) \approx P\big(x - x_{pi}, y - y_{pi}, z - z_{pi}\big)\big|_{z=0} \qquad \cdots(18)$$

$$P'_i(x, y) = U_i(x + \Delta x, y + \Delta y)\big|_{z=\Delta z} \cong P(x, y, z)\big|_{z=0} \qquad \cdots(19)$$

The adjustment in the x-axis direction and the y-axis direction is implemented by displacing (giving an offset to) a target pixel group of image sensor D corresponding to object beam hologram $U_i(x, y)$. The correction in the z-axis direction (focus position) is implemented by diffraction calculation by plane wave expansion shown in the expression (6). In other words, the correction in the z-axis direction is implemented by changing a distance over which image reconstruction is performed, during diffraction calculation of object beam hologram $U_i$ recorded using image sensor D.

When optical wave distribution $P_i$ (i = 1 to N-1) passes through a medium such as a half mirror, it is preferable to apply processing similar to the above-described processing of diffraction calculation in a medium and reconstruction of an image on an inclined surface.

In this way, corrected optical wave distribution $P_i'$ obtained by correcting the optical wave distribution is calculated for the numbers i = 1 to N-1.

Processing for determining complex conjugate R* of the optical wave distribution of reference beam R is finally performed. Specifically, for all numbers i (i = 0 to N-1), Fourier transform is performed on known optical wave distribution P and corrected optical wave distribution Pi', thereby calculating a spectrum F[P] and a spectrum F[$P_i'$], respectively. Then, a phase difference distribution spectrum $W_i(u, v)$ (= arg(F[$P_i'$]/F[P])) indicating a phase difference distribution of spectrum F[P] and spectrum F[$P_i'$] is calculated. arg() is a function that calculates an argument (phase) of a complex number.

On a portion of phase difference distribution spectrum $W_i(u, v)$ having phase discontinuity (gap) caused by phase periodicity, processing for making the phase continuous is preferably performed.

Using phase difference distribution spectrum $W_i(u, v)$, a wave front aberration $W_{i\_err}$ can be calculated as shown in an expression (20) below. Wave front aberration $W_{i\_err}$ is obtained by calculating a root mean square with respect to a true value as an error, with the true value being an average value $W_{ave}$ of phase difference distribution spectrum $W_i$

as a whole.

$$W_{i\_err} = \sqrt{\frac{1}{S_W} \iint [W_i(u,v) - W_{ave}]^2 dudv}$$ ···(20)

$$W_{ave} = \frac{1}{S_W} \iint W_i(u,v) dudv$$

$$S_W = \iint dudv$$

Average value $W_{ave}$ represents an average value of phase difference distribution spectrum $W_i(u, v)$, and Sw represents an area of a range where phase difference distribution spectrum $W_i(u, v)$ is integrated. The range of integration is a portion of phase difference distribution spectrum $W_i(u, v)$ where there is effective data, and is common in calculation of wave front aberration $W_{i\_err}$ and average value $W_{ave}$.

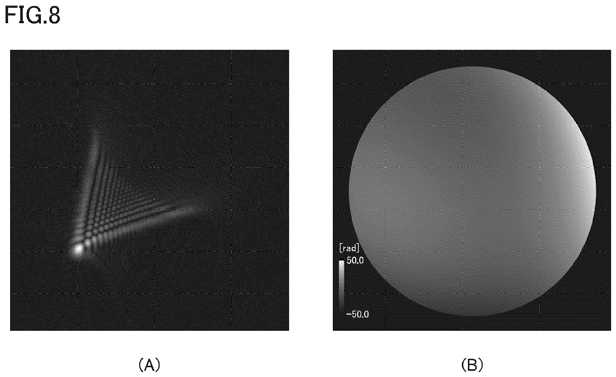

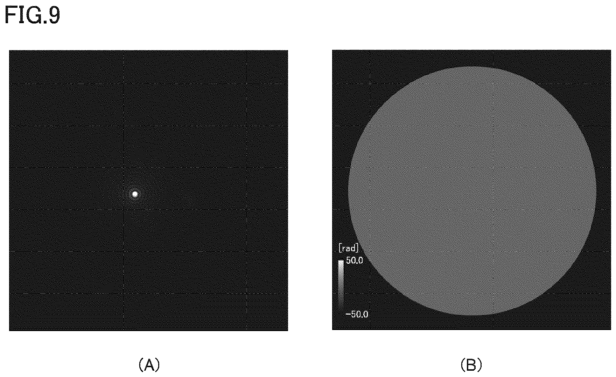

"Wave front aberration" in a narrow sense refers to a value obtained by multiplying above-described wave front aberration $W_{i\_err}$ by $\lambda/2\pi$ ($\lambda$: wavelength). Therefore, $W_{i\_err} \times \lambda/2\pi$ may be referred to as a wave front aberration. Since $\lambda/2\pi$ is a coefficient having a fixed value, the following processing will be described with the coefficient $\lambda/2\pi$ being omitted. However, in the measurement examples shown in Figs. 8 and 9 below, evaluation is performed using the wave front aberration in a narrow sense.

When the optical wave distribution is reconstructed based on correct complex conjugate R* of the optical wave distribution of reference beam R, wave front aberration $W_{i\_err}$ is 0. In contrast, when complex conjugate R* of the optical wave distribution of reference beam R has an error, distortion occurs in a wave front phase and thus wave front aberration $W_{i\_err}$ is not 0.

Therefore, the offset coordinate ($x_{p0}$, $y_{p0}$, $z_{p0}$) is adjusted to minimize a total sum (= $\Sigma W_{i\_err}$) of wave front aberrations $W_{i\_err}$ (absolute value) for all numbers i (i = 0 to N-1). A general optimization algorithm can be used as a method of parameter fitting.

As the number of produced optical wave distribution $P_i$ becomes larger, the reliability of parameter fitting can be enhanced. In addition, it is preferable to set optical wave distribution $P_i$ evenly over the entire range of the field of view that can be recorded using image sensor D.

<E. Processing Apparatus 100>

An exemplary hardware configuration of processing apparatus 100 included in optical measurement system 1 will now be described.

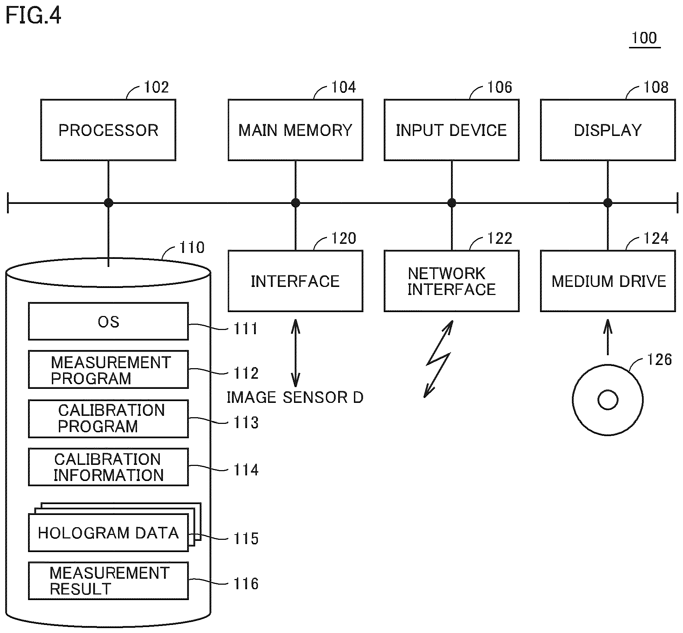

Fig. 4 is a schematic diagram showing an exemplary hardware configuration of processing apparatus 100 included in optical measurement system 1 according to the present embodiment. Referring to Fig. 4, processing apparatus 100 includes a processor 102, a main memory 104, an input device 106, a display 108, a storage 110, an interface 120, a network interface 122, and a medium drive 124 as its main hardware elements.

Processor 102 is typically a computing processing unit such as a central processing unit (CPU) or a graphics processing unit (GPU), and it reads one program or a plurality of programs stored in storage 110 on main memory 104 and executes the same. Main memory 104 is a volatile memory such as a dynamic random access memory (DRAM) or a static random access memory (SRAM), and functions as a working memory for execution of a program by processor 102.

Input device 106 includes a keyboard, a mouse, and the like and accepts an operation from a user. Display 108 provides output of a result of execution of a program by processor 102 to a user.

Storage 110 is implemented by a non-volatile memory such as a hard disk or a flash memory, and various programs and data are stored therein. More specifically, an operating system 111 (OS), a measurement program 112, a calibration program 113, calibration information 114, hologram data 115, and a measurement result 116 are held in storage 110.

Operating system 111 provides an environment where processor 102 executes a program. Measurement program 112 implements the measurement processing according to the present embodiment by being executed by processor 102. Calibration program 113 implements the calibration processing according to the present embodiment by being executed by processor 102. Calibration information 114 is a parameter determined by the calibration processing and is referenced in the measurement processing. Hologram data 115 corresponds to image data output from image sensor D. Measurement result 116 includes a measurement result obtained by execution of measurement program 112.

In this way, storage 110 stores the information (calibration information 114) about the optical wave distribution of reference beam R in the optical system shown in Figs. 1 and 2.

Interface 120 mediates data transmission between processing apparatus 100 and image sensor D. Network interface 122 mediates data transmission between processing apparatus 100 and an external server apparatus.

Medium drive 124 reads necessary data from a recording medium 126 (for example, an optical disc) where a program to be executed by processor 102 is stored and has the data stored in storage 110. Measurement program 112 and/or calibration program 113 or the like executed in processing apparatus 100 may be installed through recording medium 126 or downloaded from a server apparatus through network interface 122 or the like.

Measurement program 112 and/or calibration program 113 may perform processing by calling a necessary module out of program modules provided as a part of operating system 111 in a predetermined sequence and at predetermined timing. In such a case, measurement program 112 and/or calibration program 113 not including the modules is also encompassed in the technical scope of the present invention. Measurement program 112 and/or calibration program 113 may be provided as being incorporated as a part of another program.

All or some of functions provided by execution of a program by processor 102 of processing apparatus 100 may be implemented by a hard-wired logic circuit (for example, a field-programmable gate array (FPGA) or an application specific integrated circuit (ASIC)).

For convenience in description, Fig. 4 shows the exemplary configuration of processing apparatus 100 that can perform both the measurement processing and the calibration processing. However, processing apparatus 100 may perform only one of the measurement processing and the calibration processing. For example, the calibration processing is performed before factory shipment of optical measurement system 1 and complex conjugate R* of the optical wave distribution of reference beam R is preliminarily determined. Therefore, the calibration processing does not need to be performed after factory shipment and only the measurement processing may be performed. In such a case, a processing apparatus that can perform the calibration processing and a processing apparatus that can perform the measurement processing may be prepared separately.

<F. Process Procedure>

The measurement processing and the calibration processing performed in optical measurement system 1 will now be described.

(f1: Measurement Processing)

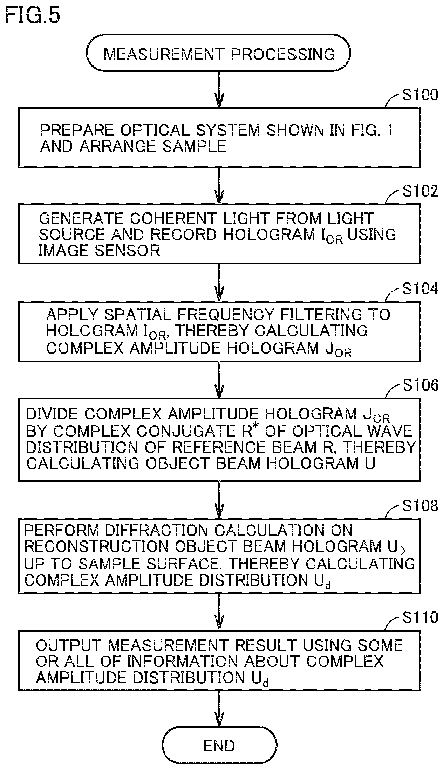

Fig. 5 is a flowchart showing a process procedure of the measurement processing performed in optical measurement system 1 according to the present embodiment. In the measurement processing shown in Fig. 5, complex conjugate R*, which is the information about the optical wave distribution of reference beam R in the optical system shown in Figs. 1 and 2, is preliminarily obtained in some way. The steps performed by processing apparatus 100 shown in Fig. 5 are typically implemented by execution of measurement program 112 by processor 102 of processing apparatus 100.

Referring to Fig. 5, the optical system shown in Fig. 1 is prepared and sample S is arranged (step S100). Then, the coherent light is generated from light source 10 and processing apparatus 100 records hologram $I_{OR}$ using image sensor D (step S102). In this way, the processing for recording hologram $I_{OR}$ (third hologram) caused by modulating, with reference beam R, object beam O obtained by illumination of sample S with illumination light Q is performed.

Processing apparatus 100 applies spatial frequency filtering to recorded hologram $I_{OR}$, thereby calculating complex amplitude hologram $J_{OR}$ (step S104) (refer to the expression (4) above). Next, processing apparatus 100 divides calculated complex amplitude hologram $J_{OR}$ by complex conjugate R* of the optical wave distribution of reference beam R, thereby calculating object beam hologram U (step S106) (refer to the expression (5) above). In this way, the processing for applying spatial frequency filtering to hologram $I_{OR}$ (third hologram) and calculating object beam hologram U based on the filtering result and complex conjugate R* of the optical wave distribution of reference beam R (information about the optical wave distribution of reference beam R) is performed.

Processing apparatus 100 may perform, on object beam hologram U, the processing of the increase of the number of sampling points and the superimposition, thereby calculating reconstruction object beam hologram $U_\Sigma$. When the processing of the increase of the number of sampling points and the superimposition is omitted, object beam hologram U is adopted as it is as reconstruction object beam hologram $U_\Sigma$.

Processing apparatus 100 performs diffraction calculation on calculated reconstruction object beam hologram $U_\Sigma$ up to the sample surface, thereby calculating complex amplitude distribution $U_d$ (step S108) (refer to the expressions (6) and (7) above). Then, processing apparatus 100 outputs the measurement result using some or all of the information about calculated complex amplitude distribution $U_d$ (step S110). For example, an image corresponding to a bright field of an optical microscope is generated by extracting an amplitude component from complex amplitude distribution $U_d$

and forming an image of the extracted amplitude component.

The processing in steps S102 to S110 shown in Fig. 5 is performed for each sample S. Processing for preliminarily recording hologram $I_{OR}$ corresponding to each of a plurality of samples S and outputting the measurement result afterward may be performed.

(f2: Calibration Processing)

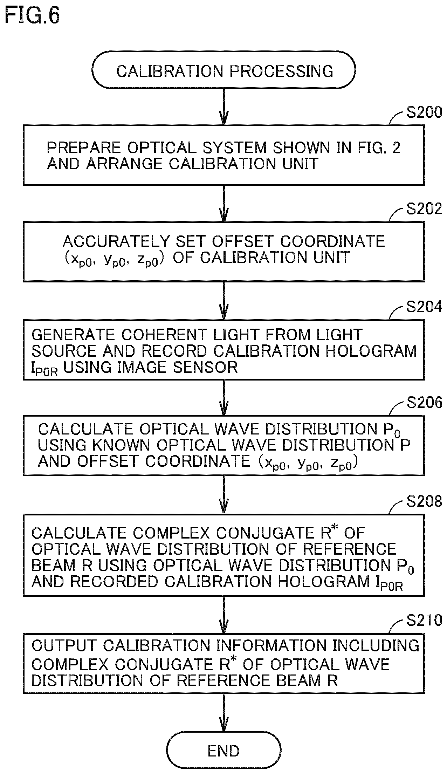

Fig. 6 is a flowchart showing a process procedure of the calibration processing performed in optical measurement system 1 according to the present embodiment. The calibration processing shown in Fig. 6 is a process procedure when known optical wave distribution P and the correct offset coordinate are obtained. The steps performed by processing apparatus 100 shown in Fig. 6 are typically implemented by execution of calibration program 113 by processor 102 of processing apparatus 100.

Referring to Fig. 6, the optical system shown in Fig. 2 is prepared and calibration unit 20 is arranged (step S200). At this time, the offset coordinate $(x_{p0}, y_{p0}, z_{p0})$ of calibration unit 20 is accurately set (step S202). In this way, the processing for preparing the optical system (optical measurement system 1 shown in Figs. 1 and 2) for recording the hologram caused by modulating, with reference beam R, object beam O obtained by illumination of sample S with illumination light Q, and the processing for arranging calibration unit 20, which includes the optical system (profile generator 30) that produces known optical wave distribution P, on the optical path of illumination light Q in the state where there is no sample S are performed.

Then, the coherent light is generated from light source 10 and processing apparatus 100 records calibration hologram $I_{P0R}$ using image sensor D (step S204). In this way, the processing for recording calibration hologram $I_{P0R}$ (first hologram) caused while calibration unit 20 is producing optical wave distribution $P_0$ is performed.

Processing apparatus 100 calculates optical wave distribution $P_0$ using known optical wave distribution P and the offset coordinate $(x_{p0}, y_{p0}, z_{p0})$ (step S206) (refer to the expression (11) above), and calculates complex conjugate $R^*$ of the optical wave distribution of reference beam R using calculated optical wave distribution $P_0$ and recorded calibration hologram $I_{P0R}$ (step S208) (refer to the expression (14) above). In this way, the processing for calculating complex conjugate $R^*$, which is the information about the optical wave distribution of reference beam R, based on the information indicating the position where calibration unit 20 is arranged (offset coordinate), known optical wave distribution P, and calibration hologram $I_{P0R}$ (first hologram) is performed.

Then, processing apparatus 100 outputs calibration information 114 including calculated complex conjugate $R^*$ of the optical wave distribution of reference beam R (step S210). Then, the calibration processing ends.

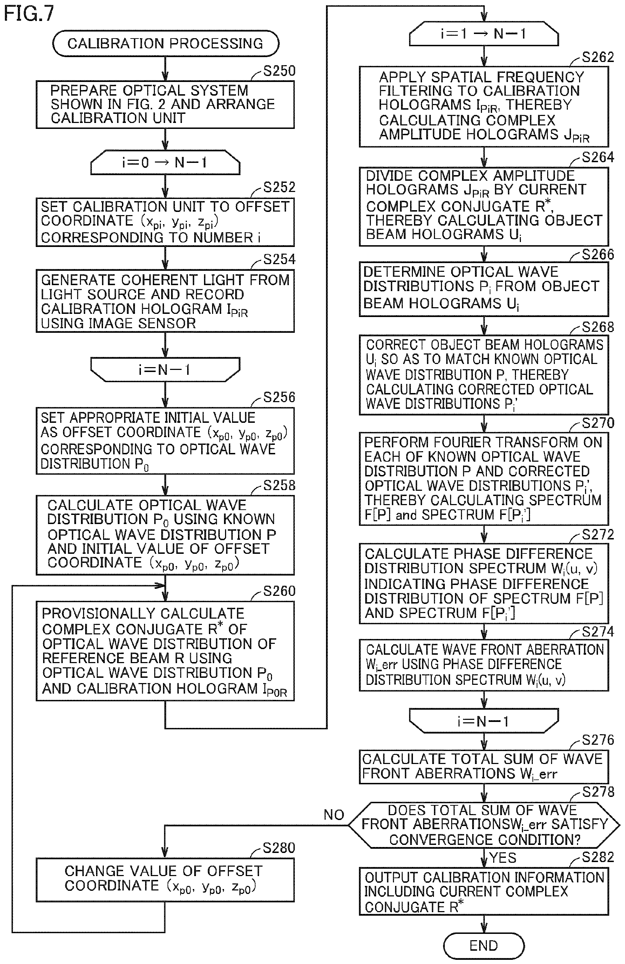

Fig. 7 is a flowchart showing another process procedure of the calibration processing performed in optical measurement system 1 according to the present embodiment. The calibration processing shown in Fig. 7 is a process procedure when the correct offset coordinate is not obtained. The steps performed by processing apparatus 100 shown in Fig. 7 are typically implemented by execution of calibration program 113 by processor 102 of processing apparatus 100.

Referring to Fig. 7, the optical system shown in Fig. 2 is prepared and calibration unit 20 is arranged (step S250). In this way, the processing for preparing the optical system (optical measurement system 1 shown in Figs. 1 and 2) for recording the hologram caused by modulating, with reference beam R, object beam O obtained by illumination of sample S with illumination light Q, and the processing for arranging calibration unit 20, which includes the optical system (profile generator 30) that produces known optical wave distribution P, on the optical path of illumination light Q in the state where there is no sample S are performed.

Next, processing for sequentially translating profile generator 30 and recording N calibration holograms $I_{PiR}$ is performed. More specifically, calibration unit 20 is set to the offset coordinate $(x_{pi}, y_{pi}, z_{pi})$ corresponding to the number i (step S252). Then, the coherent light is generated from light source 10 and processing apparatus 100 records calibration hologram $I_{PiR}$ using image sensor D (step S254). The processing in steps S252 and S254 is repeated until the number i reaches N-1 from 0.

In this way, the processing for recording calibration hologram $I_{P0R}$ (first hologram) caused while calibration unit 20 is producing optical wave distribution $P_0$ is performed. In addition, the processing for moving the optical wave distribution produced by calibration unit 20 to a plurality of positions (offset coordinate $(x_{pi}, y_{pi}, z_{pi}: i > 0)$) different from the position (offset coordinate $(x_{p0}, y_{p0}, z_{p0})$) where calibration hologram $I_{P0R}$ (first hologram) is recorded, and recording a plurality of calibration holograms $I_{PiR}$ (plurality of second holograms) caused at the plurality of positions, respectively, is performed.

Next, processing for provisionally calculating complex conjugate $R^*$ of the optical wave distribution of reference beam R is performed. More specifically, an appropriate initial value is set as the offset coordinate $(x_{p0}, y_{p0}, z_{p0})$ corresponding to optical wave distribution $P_0$ when the number i = 0 (step S256). Then, processing apparatus 100 calculates optical wave distribution $P_0$ using known optical wave distribution P and the initial value of the offset coordinate $(x_{p0}, y_{p0}, z_{p0})$ (step S258) (refer to the expression (11) above), and provisionally calculates complex conjugate $R^*$ of the optical wave distribution of reference beam R using calculated optical wave distribution $P_0$ and recorded calibration

hologram $I_{P0R}$ (step S260) (refer to the expression (14) above).

In this way, the processing for calculating complex conjugate R*, which is the information about the optical wave distribution of reference beam R, based on the information indicating the position where calibration unit 20 is arranged (initial value of the offset coordinate), known optical wave distribution P and calibration hologram $I_{P0R}$ (first hologram) is performed.

Next, processing for correcting the optical wave distribution is performed. More specifically, processing apparatus 100 applies spatial frequency filtering to recorded calibration holograms $I_{PiR}$, thereby calculating complex amplitude holograms $J_{PiR}$ (step S262) (refer to the expression (4) above). Next, processing apparatus 100 divides calculated complex amplitude holograms $J_{PiR}$ by current complex conjugate R*, thereby calculating object beam holograms $U_i$ (step S264) (refer to the expressions (6) and (7) above). In this way, the processing of applying spatial frequency filtering to each of the plurality of calibration holograms $I_{PiR}$ (plurality of second holograms), and calculating the plurality of object beam holograms $U_i$ corresponding to the plurality of calibration holograms $I_{PiR}$, respectively, based on the filtering result and complex conjugate R* (information about the optical wave distribution of reference beam R) is performed.

Next, processing apparatus 100 determines optical wave distributions $P_i$ from calculated object beam holograms $U_i$ (step S266). Then, processing apparatus 100 corrects object beam holograms $U_i$ so as to match known optical wave distribution P, thereby calculating corrected optical wave distributions $P_i'$ (step S268) (refer to the expressions (18) and (19) above). In this way, processing apparatus 100 corrects each of the plurality of object beam holograms $U_i$ based on known optical wave distribution P, thereby calculating the plurality of corrected optical wave distributions $P_i'$ corresponding to the plurality of calibration holograms $I_{PiR}$, respectively.

Next, processing apparatus 100 calculates a wave front aberration based on a spectrum calculated from known optical wave distribution P and a spectrum calculated from corrected optical wave distributions $P_i'$ corresponding to the plurality of calibration holograms $I_{PiR}$ (plurality of second holograms).

More specifically, processing apparatus 100 performs Fourier transform on each of known optical wave distribution P and corrected optical wave distributions $P_i'$, thereby calculating spectrum F[P] and spectrum $F[P_i']$ (step S270). Then, processing apparatus 100 calculates phase difference distribution spectrum $W_i(u, v)$ (= $arg(F[P_i']/F[P])$) indicating the phase difference distribution of spectrum F[P] and spectrum $F[P_i']$ (step S272). In this way, processing apparatus 100 calculates phase difference distribution spectrum $W_i(u, v)$, which is the phase difference distribution of spectrum F[P] calculated from known optical wave distribution P and spectrum $F[P_i']$ calculated from corrected optical wave distribution $P_i'$ corresponding to calibration hologram $I_{PiR}$ (second hologram).

Finally, processing apparatus 100 calculates wave front aberration $W_{i\_err}$ using calculated phase difference distribution spectrum $W_i(u, v)$ (step S274). As shown in the expression (20) above, processing apparatus 100 calculates, as an error, a root mean square with respect to average value $W_{ave}$ of phase difference distribution spectrum $W_i$ as a whole in the processing for calculating wave front aberration $W_{i\_err}$.

The processing in steps S262 to S274 is repeated until the number i reaches N-1 from 1.

Next, processing apparatus 100 adjusts the value of the offset coordinate ($x_{p0}$, $y_{p0}$, $z_{p0}$) of calibration unit 20 (information indicating the arrangement position) so as to minimize wave front aberration $W_{i\_err}$.

More specifically, processing apparatus 100 calculates a total sum (= $\Sigma W_{i\_err}$) of wave front aberrations $W_{i\_err}$ calculated in step S274 (step S276), and determines whether the calculated total sum of wave front aberrations $W_{i\_err}$ satisfies a convergence condition (step S278). The convergence condition may include, for example, the total sum of wave front aberrations $W_{i\_err}$ being equal to or smaller than a predetermined value.

When the total sum of wave front aberrations $W_{i\_err}$ does not satisfy the convergence condition (NO in step S278), processing apparatus 100 changes the value of the offset coordinate ($x_{p0}$, $y_{p0}$, $z_{p0}$) (step S280), and repeats the processing in and after step S260.

When the total sum of wave front aberrations $W_{i\_err}$ does not satisfy the convergence condition (YES in step S278), processing apparatus 100 outputs calibration information 114 including current complex conjugate R* (step S282). Then, the calibration processing ends.

<G. Measurement Examples>

Measurement examples by the optical measurement system according to the present embodiment will now be described. The measurement examples below are for describing increasing the accuracy by determining complex conjugate R* of the optical wave distribution of reference beam R using calibration unit 20.

First, the optical system shown in Fig. 2 was prepared. The wavelength of light source 10 was set to 532 nm and the optical system having a recorded numerical aperture NA = 0.5 was prepared. Then, optical wave distribution $P_i$ (i = 0 to N-1) produced by calibration unit 20 was recorded. In the measurement examples shown in Figs. 8 and 9, optical wave distribution $P_i$ was recorded at eleven points (N = 11; i = 0 to 10).

As described above, optical wave distribution $P_i$ is obtained by translating known optical wave distribution P in each of the x-axis direction, the y-axis direction and the z-axis direction within the range of the field of view of image sensor D. A point light source was used as known optical wave distribution P.

An initial value determined in consideration of the optical positional relationship of calibration unit 20 was set as the offset coordinate $(x_{p0}, y_{p0}, z_{p0})$ corresponding to optical wave distribution $P_0$, and complex conjugate R* of the optical wave distribution of reference beam R was calculated using the set initial value.

Fig. 8 is a diagram showing measurement examples in an initial stage of the calibration processing in optical measurement system 1 according to the present embodiment. Fig. 8(A) shows an amplitude distribution in the vicinity of a light condensation point of an object beam hologram $U_1$ reconstructed using the initial value of the offset coordinate. Fig. 8(B) shows a distribution of a wave front aberration $W_{1\_err}$ calculated using the amplitude distribution in the vicinity of the light condensation point of object beam hologram $U_1$. Wave front aberration $W_{1\_err}$ in the case of using the initial value of the offset coordinate was 2.924 $\lambda$.

Since the initial value of the offset coordinate does not correctly reflect the optical positional relationship of calibration unit 20, complex conjugate R* of the optical wave distribution of reference beam R is also inaccurate. As a result, as shown in Fig. 8(A), the light condensation point (airy disc spot) does not have a spot shape and has variations. In addition, as shown in Fig. 8(B), object beam hologram $U_1$ has the large wave front aberration.

A result obtained by adjusting the offset coordinate $(x_{p0}, y_{p0}, z_{p0})$ so as to minimize the total sum of the wave front aberrations in accordance with the above-described procedure will now be described. Complex conjugate R* of the optical wave distribution of reference beam R was calculated using the adjusted offset coordinate $(x_{p0}, y_{p0}, z_{p0})$.

Fig. 9 is a diagram showing measurement examples after the calibration processing in optical measurement system 1 according to the present embodiment. Fig. 9(A) shows an amplitude distribution in the vicinity of a light condensation point of object beam hologram $U_1$ reconstructed using the adjusted offset coordinate. Fig. 9(B) shows a distribution of wave front aberration $W_{1\_err}$ calculated using the amplitude distribution in the vicinity of the light condensation point of object beam hologram $U_1$. Wave front aberration $W_{1\_err}$ in the case of using the initial value of the offset coordinate was 0.023 $\lambda$. As shown in Fig. 9(A), by accurately determining complex conjugate R* of the optical wave distribution of reference beam R, the light condensation point (airy disc spot) is formed in object beam hologram $U_1$, and the wave front aberration is not clearly seen in object beam hologram $U_1$ as shown in Fig. 9(B).

Generally, a state in which the wave front aberration is equal to or less than 0.07 $\lambda$ is regarded as a diffraction limit, and since wave front aberration $W_{1\_err}$ is 0.023 $\lambda$, it is recognized that the sufficient image forming performance is achieved. In addition, when the wave front aberration is also calculated for the number i = 2 to 10, wave front aberration $W_{i\_err}$ is equal to or less than 0.07 $\lambda$ for all of the reconstructed images, and thus, the image forming performance of the diffraction limit is achieved over the entire field of view.

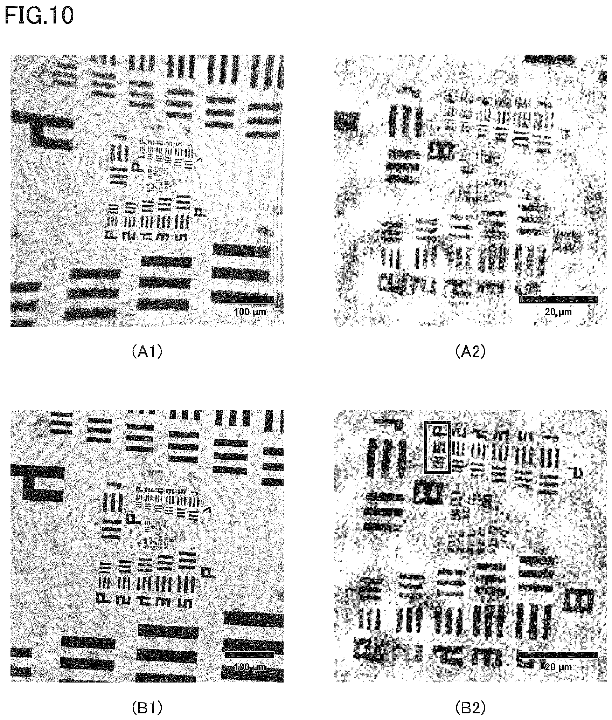

Fig. 10 is a diagram showing measurement examples of the sample by optical measurement system 1 according to the present embodiment. Fig. 10 shows reconstructed images of the sample (USAF 1951 resolution test target) reconstructed from hologram $I_{OR}$ recorded using optical measurement system 1 shown in Fig. 1.

Figs. 10(A1) and 10(A2) show a reconstructed image using the initial value of the offset coordinate. Fig. 10(A1) shows an overall image of the resolution test target, and Fig. 10(A2) shows a partially enlarged view of the resolution test target.

In the reconstructed image shown in Figs. 10(A1) and 10(A2), a large distortion occurs and a pattern line in a group 9 of the resolution test target cannot be sufficiently resolved.

Figs. 10(B1) and 10(B2) show a reconstructed image using the adjusted offset coordinate. Fig. 10(B1) shows an overall image of the resolution test target, and Fig. 10(B2) shows a partially enlarged view of the resolution test target.

In the reconstructed image shown in Fig. 10(B1), a large distortion does not occur. In addition, a line (width of 0.548 $\mu$m) of a 9-6 pattern of the test target shown by a rectangular frame line in Fig. 10(B2) can be resolved into three lines, and thus, it can be seen that the performance equivalent to that of the theoretical resolution of 0.532 $\mu$m determined from the optical system is obtained.

As described above, it can be seen that the sample can be measured with a high degree of accuracy by accurately determining complex conjugate R* of the optical wave distribution of reference beam R in accordance with the above-described calibration processing.

<H. Modifications>

Although Figs. 1 and 2 illustrate the exemplary configuration of optical measurement system 1 in which the transmission-type optical system is adopted, the present invention is not limited to this exemplary configuration and various modifications described below are possible.

(h1: First Modification)

An exemplary configuration in which the reference beam is arranged in the vicinity of the sample will be described as a first modification of the present embodiment.

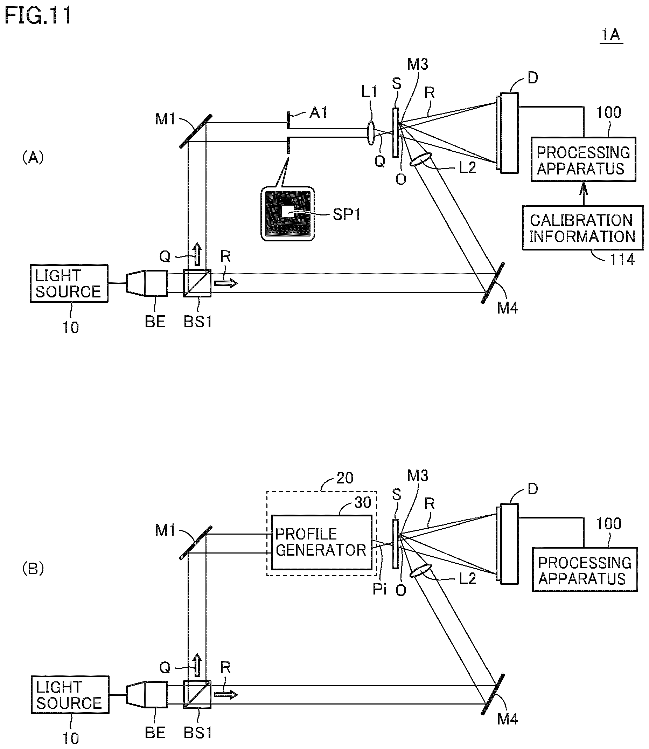

Fig. 11 is a schematic diagram showing an exemplary configuration of an optical measurement system 1A according to the first modification of the present embodiment. Fig. 11(A) shows an exemplary configuration for measurement processing and Fig. 11(B) shows an exemplary configuration for calibration processing.

Referring to Fig. 11(A), in optical measurement system 1A, a mirror M3 is arranged instead of half mirror HM2. Mirror M3 is arranged outside a range of illumination of sample S with object beam O. Reference beam R is reflected by a mirror M4 and changed in propagation direction, and is guided to mirror M3. Reference beam R is further reflected by mirror M3 and guided to a light receiving surface of image sensor D. In other words, object beam O obtained by illumination of sample S with illumination light Q is modulated with reference beam R on the light receiving surface of image sensor D.

As described above, when it is unnecessary to ensure the working distance, mirror M3 may be adopted instead of half mirror HM2. Mirror M3 may be any of a plane mirror, a convex mirror and a concave mirror.

Referring to Fig. 11(B), in optical measurement system 1A, profile generator 30 including calibration unit 20 is arranged to replace field-of-view mask A1 and condensing lens L1 that is an illumination optical system. The calibration processing is the same as the above-described processing.

(h2: Second Modification)

An exemplary configuration in which the illumination optical system is omitted will be described as a second modification of the present embodiment.

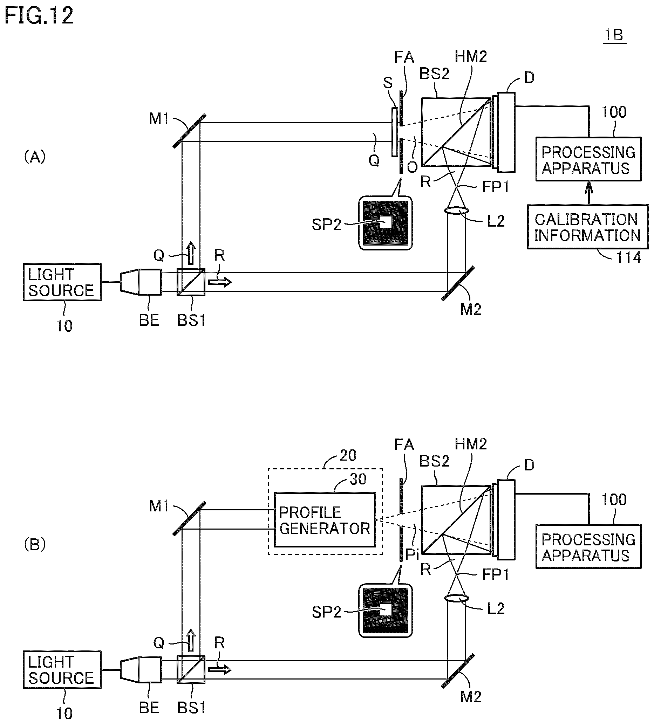

Fig. 12 is a schematic diagram showing an exemplary configuration of an optical measurement system 1B according to the second modification of the present embodiment. Fig. 12(A) shows an exemplary configuration for measurement processing and Fig. 12(B) shows an exemplary configuration for calibration processing.

Referring to Fig. 12(A), in optical measurement system 1B, field-of-view restriction mask FA is arranged in the vicinity of sample S. By using such field-of-view restriction mask FA, the illumination optical system can be simplified or omitted. Fig. 12(A) shows the exemplary configuration in which a coupling optical system (field-of-view mask A1 and condensing lens L1) corresponding to the illumination optical system is omitted.

Furthermore, any optical system may be used as the optical system for illumination of sample S with illumination light Q, as long as interference can be maintained between illumination light Q and reference beam R. For example, illumination light Q may be made incident obliquely, or diffused illumination may be adopted as illumination light Q.

Referring to Fig. 12(B), in optical measurement system 1B, profile generator 30 including calibration unit 20 is arranged on an optical path of illumination light Q in a state where sample S has been removed. Since the illumination optical system is omitted, removal of the illumination optical system when arranging calibration unit 20 is unnecessary. The calibration processing is the same as the above-described processing.

(h3: Third Modification)

An exemplary configuration in which a reflection-type optical system is used will be described as a third modification of the present embodiment.

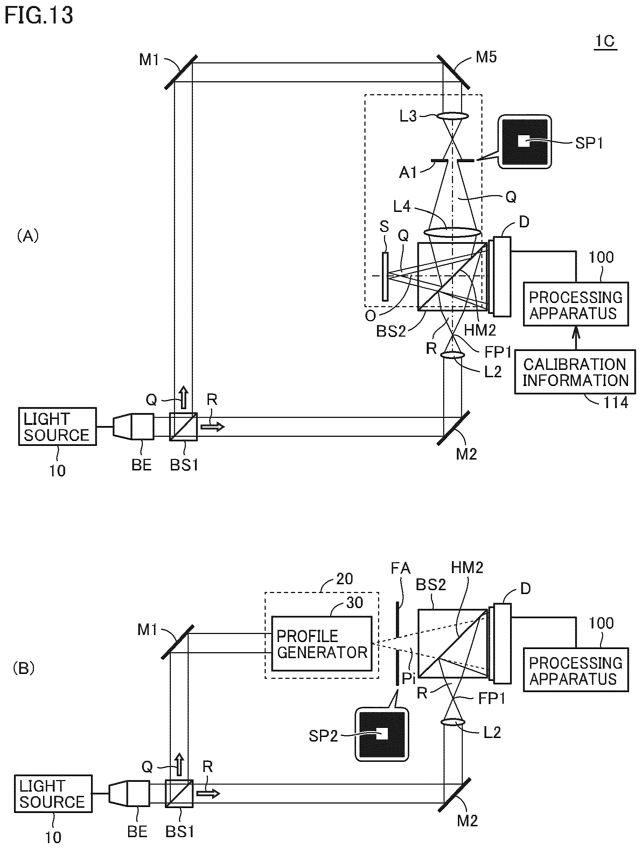

Fig. 13 is a schematic diagram showing an exemplary configuration of an optical measurement system 1C according to the third modification of the present embodiment. Fig. 13(A) shows an exemplary configuration for measurement processing and Fig. 13(B) shows an exemplary configuration for calibration processing.

Referring to Fig. 13(A), in optical measurement system 1C, illumination light Q divided by beam splitter BS1 is reflected by each of mirror M1 and a mirror M5 and changed in propagation direction, and then, is guided to half mirror HM2 through a condensing lens L3, field-of-view mask A1 and a condensing lens L4. Furthermore, illumination light Q is reflected by half mirror HM2 and illuminates sample S. Object beam O (i.e., light beam reflected by sample S) obtained by illumination of sample S with illumination light Q passes through half mirror HM2 and enters image sensor D.

On the other hand, reference beam R is reflected by mirror M2 and changed in propagation direction, and then, is condensed by condensing lens L2. Light condensation point FP1 by condensing lens L2 corresponds to the position of the point light source. Reference beam R is finally reflected by half mirror HM2 and enters image sensor D.

Referring to Fig. 13(B), the calibration processing in optical measurement system 1C is performed using a transmission-type optical system, similarly to Figs. 2 and 12(B). More specifically, profile generator 30 including calibration unit 20 is arranged on an optical path of illumination light Q in a state where sample S has been removed. The calibration processing is the same as the above-described processing.

(h4: Fourth Modification)

An exemplary configuration suitable for measurement of scattered light from sample S will be described as a fourth modification of the present embodiment.

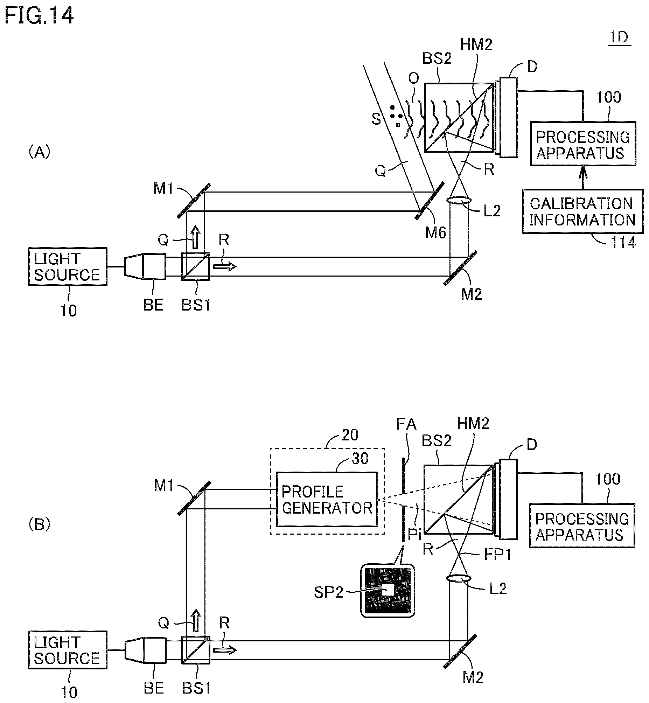

Fig. 14 is a schematic diagram showing an exemplary configuration of an optical measurement system 1D according to the fourth modification of the present embodiment. Fig. 14(A) shows an exemplary configuration for measurement processing and Fig. 14(B) shows an exemplary configuration for calibration processing.

Referring to Fig. 14(A), in optical measurement system 1D, illumination light Q divided by beam splitter BS1 is reflected by a mirror M6 and changed in propagation direction, and then, illuminates sample S. The scattered light caused by illumination of sample S with illumination light Q enters image sensor D as object beam O.

In optical measurement system 1D, the scattered light caused from sample S can be measured. Field-of-view restriction mask FA may be arranged in the vicinity of sample S, as needed. By arranging field-of-view restriction mask FA, noise can be suppressed.

Referring to Fig. 14(B), the calibration processing in optical measurement system 1D is performed using a transmission-type optical system, similarly to Figs. 2 and 12(B). More specifically, profile generator 30 including calibration unit 20 is arranged on an optical path of illumination light Q in a state where sample S has been removed. The calibration processing is the same as the above-described processing.

(h5: Fifth Modification)

Although the configuration in which light source 10 that generates the coherent light having a specific wavelength band is used is mainly described above, light source 10 that generates coherent light having a plurality of wavelength bands may be used. For example, by generating coherent light having wavelength bands corresponding to the red color (R), the green color (G) and the blue color (B), and adopting image sensor D having the light receiving sensitivity to the respective colors, holograms of the respective colors can be recorded.

In addition, by adopting a polarization image sensor as image sensor D, a polarization hologram can be recorded.

<I. Advantages>

A configuration of lensless digital holography where there is no image forming optical system such as a lens between a sample and an image sensor is adopted in the optical measurement system according to the present embodiment. Therefore, an error such as an aberration does not occur in the object beam obtained by illumination of the sample with the illumination light.

The optical measurement system according to the present embodiment preliminarily obtains the information about the optical wave distribution of the reference beam (e.g., complex conjugate R* of the optical wave distribution of reference beam R) through the calibration processing. The optical measurement system calculates the object beam hologram based on the hologram caused by modulating, with the reference beam, the object beam obtained by illumination of the sample with the illumination light, and the information about the optical wave distribution of the reference beam, and thus, can calculate or measure the shape (optical wave amplitude and phase) and the like of the sample at an arbitrary position afterward.

The optical measurement system according to the present embodiment illuminates the known optical wave distribution, instead of the object beam, from the known arrangement position (coordinate), and thus, can calculate the information about the optical wave distribution of the reference beam. Therefore, accurate adjustment of in-line spherical wave light to an in-line axis is unnecessary and time and efforts for adjustment are not required.

The optical measurement system according to the present embodiment illuminates the known optical wave distribution, instead of the object beam, from the plurality of arrangement positions (coordinates), and thus, can calculate the information about the optical wave distribution of the reference beam through parameter fitting. Therefore, accurate adjustment of in-line spherical wave light to an in-line axis is unnecessary and time and efforts for adjustment are not required. In addition, even when the arrangement positions where the known optical wave distribution is illuminated are not accurately known, the optical measurement system can accurately calculate the information about the optical wave distribution of the reference beam.

It should be understood that the embodiment disclosed herein is illustrative and non-restrictive in every respect. The scope of the present invention is defined by the terms of the claims, rather than the description above, and is intended to include any modifications within the scope and meaning equivalent to the terms of the claims.

REFERENCE SIGNS LIST

1, 1A, 1B, 1C, 1D optical measurement system; 10 light source; 20 calibration unit; 30, 30A, 30B, 30C, 30D profile generator; 31, 33, 34 light shielding plate; 32, 36 pinhole; 35, 37, L1, L2, L3, L4 condensing lens; 38 objective lens; 100 processing apparatus; 102 processor; 104 main memory; 106 input device; 108 display; 110 storage; 111 operating system; 112 measurement program; 113 calibration program; 114 calibration information; 115 hologram data; 116 measurement result; 120 interface; 122 network interface; 124 medium drive; 126 recording medium; A1 field-of-view mask; BE beam expander; BS1, BS2 beam splitter; D image sensor; FA field-of-view restriction mask; FP1 light condensation point; M1, M2, M3, M4, M5, M6 mirror; O object beam; Q illumination light; R reference beam; S sample; SP1, SP2 opening.

**Claims**

1. An optical measurement method comprising:

   preparing an optical system for recording a hologram caused by modulating, with a reference beam, an object beam obtained by illumination of a sample with illumination light, the reference beam being coherent to the illumination light;
   arranging a calibration unit on an optical path of the illumination light in a state where there is no sample, the calibration unit comprising an optical system configured to produce a known optical wave distribution;
   recording a first hologram caused while the calibration unit is producing an optical wave distribution; and
   calculating information about an optical wave distribution of the reference beam based on information indicating a position where the calibration unit is arranged, the known optical wave distribution, and the first hologram.

2. The optical measurement method according to claim 1, wherein

   the calibration unit is configured to spatially move the produced optical wave distribution,
   the optical measurement method further comprising:

   moving the produced optical wave distribution to a plurality of positions different from a position where the first hologram is recorded, and recording a plurality of second holograms caused at the plurality of positions, respectively;
   calculating a wave front aberration based on a spectrum calculated from the known optical wave distribution and a spectrum calculated from optical wave distributions corresponding to the plurality of second holograms; and
   adjusting the information indicating the position where the calibration unit is arranged, to minimize the wave front aberration.

3. The optical measurement method according to claim 2, further comprising:

   applying spatial frequency filtering to each of the plurality of second holograms, and calculating a plurality of object beam holograms corresponding to the plurality of second holograms, respectively, based on a filtering result and the information about the optical wave distribution of the reference beam; and
   correcting each of the plurality of object beam holograms based on the known optical wave distribution, thereby calculating a plurality of optical wave distributions corresponding to the plurality of second holograms, respectively.

4. The optical measurement method according to claim 2 or 3, wherein
   the calculating a wave front aberration comprises:

   calculating a phase difference distribution spectrum, the phase difference distribution spectrum being a phase difference distribution of the spectrum calculated from the known optical wave distribution and the spectrum calculated from the optical wave distributions corresponding to the second holograms; and
   calculating, as an error, a root mean square with respect to an average value of the phase difference distribution spectrum as a whole.

5. The optical measurement method according to any one of claims 1 to 4, further comprising:

   recording a third hologram caused by modulating, with the reference beam, the object beam obtained by illumination of the sample with the illumination light; and
   applying spatial frequency filtering to the third hologram, and calculating an object beam hologram based on a filtering result and the information about the optical wave distribution of the reference beam.

6. The optical measurement method according to any one of claims 1 to 5, wherein

the information about the optical wave distribution of the reference beam comprises a complex conjugate of the optical wave distribution of the reference beam.

7.  An optical measurement method comprising:

    preparing an optical system for recording a hologram caused by modulating, with a reference beam, an object beam obtained by illumination of a sample with illumination light, the reference beam being coherent to the illumination light;
    obtaining information about an optical wave distribution of the reference beam in the optical system;
    recording the hologram caused by modulating, with the reference beam, the object beam obtained by illumination of the sample with the illumination light, the reference beam being coherent to the illumination light; and
    applying spatial frequency filtering to the hologram, and calculating an object beam hologram based on a filtering result and the information about the optical wave distribution of the reference beam.

8.  The optical measurement method according to claim 7, wherein
    the information about the optical wave distribution of the reference beam is preliminarily calculated based on a hologram recorded when a calibration unit comprising an optical system configured to produce a known optical wave distribution is arranged on an optical path of the illumination light in a state where there is no sample, information indicating a position where the calibration unit is arranged, and the known optical wave distribution.

9.  An optical measurement system comprising:

    a light source configured to generate coherent light;
    a beam splitter configured to produce illumination light and a reference beam from the coherent light generated by the light source;
    an optical system for recording, using an image sensor, a hologram caused by modulating, with the reference beam, an object beam obtained by illumination of a sample with the illumination light, the reference beam being coherent to the illumination light; and
    a processing apparatus comprising a storage configured to store information about an optical wave distribution of the reference beam in the optical system, wherein
    the processing apparatus is configured to apply spatial frequency filtering to the hologram recorded using the image sensor, and calculate an object beam hologram based on a filtering result and the information about the optical wave distribution of the reference beam.

10. The optical measurement system according to claim 9, wherein
    the information about the optical wave distribution of the reference beam is preliminarily calculated based on a hologram recorded when a calibration unit comprising an optical system configured to produce a known optical wave distribution is arranged on an optical path of the illumination light in a state where there is no sample, information indicating a position where the calibration unit is arranged, and the known optical wave distribution.

FIG.1

FIG.2

# FIG.3

FIG.4

100

| | | | |
|---|---|---|---|
| PROCESSOR ⌐102 | MAIN MEMORY ⌐104 | INPUT DEVICE ⌐106 | DISPLAY ⌐108 |

⌐110

INTERFACE ⌐120

NETWORK INTERFACE ⌐122

MEDIUM DRIVE ⌐124

⌐126

OS ⌐111

MEASUREMENT PROGRAM ⌐112

CALIBRATION PROGRAM ⌐113

CALIBRATION INFORMATION ⌐114

HOLOGRAM DATA ⌐115

MEASUREMENT RESULT ⌐116

IMAGE SENSOR D

## FIG.5

```
( MEASUREMENT PROCESSING )
            │
            ▼                              ⌐S100
┌─────────────────────────────────────────┐
│ PREPARE OPTICAL SYSTEM SHOWN IN FIG. 1   │
│ AND ARRANGE SAMPLE                       │
└─────────────────────────────────────────┘
            │
            ▼                              ⌐S102
┌─────────────────────────────────────────┐
│ GENERATE COHERENT LIGHT FROM LIGHT       │
│ SOURCE AND RECORD HOLOGRAM $I_{OR}$ USING│
│ IMAGE SENSOR                             │
└─────────────────────────────────────────┘
            │
            ▼                              ⌐S104
┌─────────────────────────────────────────┐
│ APPLY SPATIAL FREQUENCY FILTERING TO     │
│ HOLOGRAM $I_{OR}$, THEREBY CALCULATING   │
│ COMPLEX AMPLITUDE HOLOGRAM $J_{OR}$      │
└─────────────────────────────────────────┘
            │
            ▼                              ⌐S106
┌─────────────────────────────────────────┐
│ DIVIDE COMPLEX AMPLITUDE HOLOGRAM $J_{OR}$│
│ BY COMPLEX CONJUGATE $R^{*}$ OF OPTICAL WAVE│
│ DISTRIBUTION OF REFERENCE BEAM R, THEREBY│
│ CALCULATING OBJECT BEAM HOLOGRAM U       │
└─────────────────────────────────────────┘
            │
            ▼                              ⌐S108
┌─────────────────────────────────────────┐
│ PERFORM DIFFRACTION CALCULATION ON       │
│ RECONSTRUCTION OBJECT BEAM HOLOGRAM $U_{\Sigma}$│
│ UP TO SAMPLE SURFACE, THEREBY CALCULATING│
│ COMPLEX AMPLITUDE DISTRIBUTION $U_{d}$   │
└─────────────────────────────────────────┘
            │
            ▼                              ⌐S110
┌─────────────────────────────────────────┐
│ OUTPUT MEASUREMENT RESULT USING SOME     │
│ OR ALL OF INFORMATION ABOUT COMPLEX      │
│ AMPLITUDE DISTRIBUTION $U_{d}$           │
└─────────────────────────────────────────┘
            │
            ▼
        ( END )
```

# FIG.6

CALIBRATION PROCESSING

S200

PREPARE OPTICAL SYSTEM SHOWN IN FIG. 2 AND ARRANGE CALIBRATION UNIT

S202

ACCURATELY SET OFFSET COORDINATE $(x_{p0}, y_{p0}, z_{p0})$ OF CALIBRATION UNIT

S204

GENERATE COHERENT LIGHT FROM LIGHT SOURCE AND RECORD CALIBRATION HOLOGRAM $I_{P0R}$ USING IMAGE SENSOR

S206

CALCULATE OPTICAL WAVE DISTRIBUTION $P_0$ USING KNOWN OPTICAL WAVE DISTRIBUTION P AND OFFSET COORDINATE $(x_{p0}, y_{p0}, z_{p0})$

S208

CALCULATE COMPLEX CONJUGATE $R^*$ OF OPTICAL WAVE DISTRIBUTION OF REFERENCE BEAM R USING OPTICAL WAVE DISTRIBUTION $P_0$ AND RECORDED CALIBRATION HOLOGRAM $I_{P0R}$

S210

OUTPUT CALIBRATION INFORMATION INCLUDING COMPLEX CONJUGATE $R^*$ OF OPTICAL WAVE DISTRIBUTION OF REFERENCE BEAM R

END

# FIG.7

CALIBRATION PROCESSING

PREPARE OPTICAL SYSTEM SHOWN IN FIG. 2 AND ARRANGE CALIBRATION UNIT ⟋S250

i=0 → N−1

SET CALIBRATION UNIT TO OFFSET COORDINATE ($x_{pi}$, $y_{pi}$, $z_{pi}$) CORRESPONDING TO NUMBER i ⟋S252

GENERATE COHERENT LIGHT FROM LIGHT SOURCE AND RECORD CALIBRATION HOLOGRAM $I_{PiR}$ USING IMAGE SENSOR ⟋S254

i=N−1

SET APPROPRIATE INITIAL VALUE AS OFFSET COORDINATE ($x_{p0}$, $y_{p0}$, $z_{p0}$) CORRESPONDING TO OPTICAL WAVE DISTRIBUTION $P_0$ ⟋S256

CALCULATE OPTICAL WAVE DISTRIBUTION $P_0$ USING KNOWN OPTICAL WAVE DISTRIBUTION P AND INITIAL VALUE OF OFFSET COORDINATE ($x_{p0}$, $y_{p0}$, $z_{p0}$) ⟋S258

PROVISIONALLY CALCULATE COMPLEX CONJUGATE $R^*$ OF OPTICAL WAVE DISTRIBUTION OF REFERENCE BEAM R USING OPTICAL WAVE DISTRIBUTION $P_0$ AND CALIBRATION HOLOGRAM $I_{P0R}$ ⟋S260

CHANGE VALUE OF OFFSET COORDINATE ($x_{p0}$, $y_{p0}$, $z_{p0}$) ⟋S280

i=1 → N−1

APPLY SPATIAL FREQUENCY FILTERING TO CALIBRATION HOLOGRAMS $I_{PiR}$, THEREBY CALCULATING COMPLEX AMPLITUDE HOLOGRAMS $J_{PiR}$ ⟋S262

DIVIDE COMPLEX AMPLITUDE HOLOGRAMS $J_{PiR}$ BY CURRENT COMPLEX CONJUGATE $R^*$, THEREBY CALCULATING OBJECT BEAM HOLOGRAMS $U_i$ ⟋S264

DETERMINE OPTICAL WAVE DISTRIBUTIONS $P_i$ FROM OBJECT BEAM HOLOGRAMS $U_i$ ⟋S266

CORRECT OBJECT BEAM HOLOGRAMS $U_i$ SO AS TO MATCH KNOWN OPTICAL WAVE DISTRIBUTION P, THEREBY CALCULATING CORRECTED OPTICAL WAVE DISTRIBUTIONS $P_i'$ ⟋S268

PERFORM FOURIER TRANSFORM ON EACH OF KNOWN OPTICAL WAVE DISTRIBUTION P AND CORRECTED OPTICAL WAVE DISTRIBUTIONS $P_i'$, THEREBY CALCULATING SPECTRUM $F[P]$ and SPECTRUM $F[P_i']$ ⟋S270

CALCULATE PHASE DIFFERENCE DISTRIBUTION SPECTRUM $W_i(u, v)$ INDICATING PHASE DIFFERENCE DISTRIBUTION OF SPECTRUM $F[P]$ AND SPECTRUM $F[P_i']$ ⟋S272

CALCULATE WAVE FRONT ABERRATION $W_{i\_err}$ USING PHASE DIFFERENCE DISTRIBUTION SPECTRUM $W_i(u, v)$ ⟋S274

i=N−1

CALCULATE TOTAL SUM OF WAVE FRONT ABERRATIONS $W_{i\_err}$ ⟋S276

DOES TOTAL SUM OF WAVE FRONT ABERRATIONS $W_{i\_err}$ SATISFY CONVERGENCE CONDITION? ⟋S278 — NO / YES

OUTPUT CALIBRATION INFORMATION INCLUDING CURRENT COMPLEX CONJUGATE $R^*$ ⟋S282

END

FIG.8

(A)                                              (B)

FIG.9

(A)

(B)

FIG.10

(A1)

(A2)

(B1)

(B2)

# FIG.11

<u>1A</u>

(A)

(B)

# FIG.12

**1B**

(A)

(B)

# FIG.13

(A)

(B)

# FIG.14

(A)

(B)

**INTERNATIONAL SEARCH REPORT**

| International application No. |
|---|
| **PCT/JP2021/040987** |

**A. CLASSIFICATION OF SUBJECT MATTER**

*G01J 9/02*(2006.01)i; *G03H 1/08*(2006.01)i; *G01B 11/24*(2006.01)i; *G01N 21/45*(2006.01)i
FI:    G01J9/02; G03H1/08; G01B11/24 D; G01N21/45 A

According to International Patent Classification (IPC) or to both national classification and IPC

**B. FIELDS SEARCHED**

Minimum documentation searched (classification system followed by classification symbols)

    G01J9/02; G03H1/08; G01B11/24; G01N21/45; G01B9/00

Documentation searched other than minimum documentation to the extent that such documents are included in the fields searched

    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/044336 A1 (UNIVERSITY OF HYOGO) 07 March 2019 (2019-03-07) paragraphs [0022]-[0060], [0072]-[0088], fig. 1-5 | 1, 5-10 |
| A | | 2-4 |
| Y | JP 2013-221770 A (NIKON CORPORATION) 28 October 2013 (2013-10-28) paragraphs [0017]-[0040], [0149], fig. 1 | 1, 5-10 |
| A | WO 2014/054776 A1 (UNIVERSITY OF HYOGO) 10 April 2014 (2014-04-10) entire text, all drawings | 1-10 |
| A | JP 2019-12270 A (HAMAMATSU PHOTONICS KABUSHIKI KAISHA) 24 January 2019 (2019-01-24) entire text, all drawings | 1-10 |
| A | CN 111751012 A (XI'AN INSTITUTE OF OPTICS AND PRECISION MECHANICS OF CAS) 09 October 2020 (2020-10-09) entire text, all drawings | 1-10 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 January 2022** | **25 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

<div align="center">

**INTERNATIONAL SEARCH REPORT**
**Information on patent family members**

</div>

| | International application No. |
|---|---|
| | **PCT/JP2021/040987** |

| Patent document cited in search report | | | Publication date (day/month/year) | Patent family member(s) | Publication date (day/month/year) |
|---|---|---|---|---|---|
| WO | 2019/044336 | A1 | 07 March 2019 | US 2020/0264559 A1 paragraphs [0078]-[0111], [0120]-[0135], fig. 1-5C EP 3677969 A1 | |
| JP | 2013-221770 | A | 28 October 2013 | (Family: none) | |
| WO | 2014/054776 | A1 | 10 April 2014 | US 2015/0268628 A1 entire text, all drawings EP 2905645 A1 | |
| JP | 2019-12270 | A | 24 January 2019 | (Family: none) | |
| CN | 111751012 | A | 09 October 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6411406 B
- WO 2013047709 A
- WO 2011089820 A
- WO 2012005315 A
- WO 2020045584 A